# EUROPÄISCHE PATENTSCHRIFT

(11) **EP 1 588 051 B1**
(45) Veröffentlichungstag und Bekanntmachung des Hinweises auf die Patenterteilung: **13.07.2011**
(21) Anmeldenummer: 04790369.5
(22) Anmeldetag: 13.10.2004
(51) Int. Cl.: F04B 1/20, F04B 1/14, F16C 35/063, F16C 19/46

(54) **KOLBENMASCHINE MIT WELLE UND WÄLZLAGER**
PISTON MACHINE WITH SHAFT AND ANTIFRICTION BEARING
MACHINE A PISTON AVEC ARBRE ET PALIER A ROULEMENT

(30) Priorität: 19.12.2003 DE 10360003
(43) Veröffentlichungstag der Anmeldung: 26.10.2005
(73) Patentinhaber: Bosch Rexroth AG, 70184 Stuttgart (DE)
(72) Erfinder: BECK, Josef, 78050 Villingen-Schwenningen (DE)
(74) Vertreter: Körfer, Thomas
(86) Internationale Anmeldenummer: PCT/EP2004/011501
(87) Internationale Veröffentlichungsnummer: WO 2005/064158

(56) Entgegenhaltungen:
- EP-A- 0 324 324
- DE-A1- 2 450 580
- DE-A1- 10 220 610
- GB-A- 395 886
- GB-A- 1 127 975
- US-A1- 2003 048 965

## Beschreibung

Die Erfindung betrifft eine Kolbenmaschine nach dem Oberbegriff des Anspruchs 1.

Im Funktionsbetrieb einer Kolbenmaschine werden aus den Kolbenkräften resultierende Querkräfte in die Welle der Kolbenmaschine eingeleitet, die die Welle zu biegen suchen. Deshalb sind die Welle und wenigstens zwei zugehörige Drehlager hinreichend stabil auszubilden. Trotz einer stabilen Ausbildung und Lagerung der Welle kommt es auf Grund der Materialelastizität zu Biegungen der Welle, was zu Schrägstellungen der Welle im Bereich der Lagerabschnitte führt, und zwar insbesondere dann, wenn die Lagerabschnitte einen axialen Abstand voneinander aufweisen. Insbesondere bei Axialkolbenmaschinen ist dieser Abstand verhältnismäßig groß und durch die axialen Abmessungen eines Zylinderblocks und einer Triebscheibe bestimmt.

Zum technologischen Hintergrund sei bezüglich eines Drehgleitlagers bei einer Axialkolbenmaschine z.B. auf die DE 102 20 610 A1, welche als nächstkommender Stand der Technik angesehen wird, verwiesen.

DE-A-24 50 580 offenbart einen dünnwandigen Innenlaufring in Form eines Hohlzylinders zum Einsatz in einem Wälzlager, der an einer Welle befestigt wird. Auf seiner Außenfläche können sich zylindrische Wälzkörper abrollen. An einem Ende ist er über einen Teilbereich mit einem axialen Ansatz versehen, so dass er auf der äußeren Mantelfläche aufliegt. Zur Befestigung wird ein Exzenterspannring verwendet, welcher mittels einer Bohrung auf der Welle sitzt und mit einer exzentrischen Bohrung den Laufring des Blechstreifens umgreift. Durch Drehen des Exzenterspannrings mit einem Werkzeug, das in die Radialbohrung eingreift, kommt die exzentrische Bohrung des Spannrings in Klemmkontakt mit dem Blechstreifen, so dass eine sichere Klemmverbindung zwischen Welle und Exzenterspannring und Exzenterspannring und Innenring erfolgt.

Auf Grund der Durchbiegung und der daraus resultierenden Schrägstellung des betreffenden Lagerabschnitts im Bereich des Drehlagers kommt es zwangsläufig auch zu einer Schrägstellung des Lagerringes im Drehlager, was nicht nur zu Zwängungen im Drehlager sondern auch zu einseitigen Belastungen mit entsprechend hohen Flächenpressungen führt (sogenannten Kantenläufer). Hierdurch werden die Lagerflächen höher belastet, was zu einem höheren Verschleiß und zu einer Verringerung der Lebensdauer der Drehlager führt.

Es ist bei Kolbenmaschinen üblich, die Drehlager durch Gleitlager oder Wälzlager zu bilden. Dabei ist es ebenfalls üblich, den betreffenden Lagerabschnitt der Welle durch einen zylindrischen Lagerabschnitt zu bilden, auf dem eine hohlzylindrische Lagerhülse mit einer Passung ohne radialem Bewegungsspiel sitzt.

Der Erfindung liegt die Aufgabe zu Grunde, eine Kolbenmaschine oder eine Welle oder einen inneren Lagerring zur Lagerung der Welle in der Kolbenmaschine so auszugestalten, daß die Lebensdauer des betreffenden Drehlagers verlängert wird.

Diese Aufgabe wird durch die Merkmale des Anspruchs 1 gelöst. Vorteilhafte Weiterbildungen der Erfindung sind in den zugehörigen Unteransprüchen beschrieben.

Bei der erfindungsgemäßen Kolbenmaschine nach Anspruch 1 ist die axiale Länge des Tragbereichs auf einen mittleren Bereich des Lagerabschnitts gekürzt, und in beiden äußeren Bereichen neben dem Tragbereich ist ein radiales Bewegungsspiel zwischen dem Lagerabschnitt und dem inneren Lagerring vorhanden.

Bei einer erfindungsgemäßen Ausgestaltung ist die axiale Länge des Tragbereichs auf eine mittleren Bereich des Lagerabschnitts gekürzt, wobei der Lagerabschnitt in seinem axialen mittleren Bereich einen größeren Durchmesser aufweist als in seinen äußeren Bereichen.

Bei einer anderen erfindungsgemäßen Ausgestaltung ist die axiale Länge des Tragbereichs auf einen mittleren Bereich des inneren Lagerringes gekürzt, und in beiden äußeren Bereichen neben dem Tragbereich weist der Lagerring einen Durchmesser auf, der kleiner ist als in den äußeren Bereichen.

Die erfindungsgemäßen Ausgestaltungen führen dazu, daß im montierten Zustand der Welle und/oder des inneren Lagerringes ein radiales Bewegungsspiel in den äußeren Bereichen zwischen dem Lagerabschnitt und dem Lagerring vorhanden ist, während ein mittlerer Bereich des Lagerabschnitts und des Lagerringes die erforderliche Tragfunktion erfüllt. Durch das radiale Bewegungsspiel in den äußeren Bereichen sind auf beiden Seiten des gekürzten Tragbereichs Freiräume vorhanden, in die hinein der Lagerabschnitt sich beim Durchbiegen der Welle hineinbewegen kann, ohne daß es in den Endbereichen des Lagerabschnitts zu radialen Druckbeanspruchungen kommt. Folglich werden auch die sich beim Stand der Technik ergebenden Zwängungen und erhöhten Flächenpressungen vermieden, und es werden der Verschleiß des Drehlagers verringert und dessen Lebensdauer vergrößert.

Der Lagerabschnitt bewegt sich auch dann in die auf beiden Seiten vorhandenen Freiräume hinein, wenn der Lagerinnenring mit Übermaß im angewärmten Zustand auf die Antriebswelle montiert wird.

Die Länge des gekürzten Tragbereichs kann etwa 1/4 bis 1/2, insbesondere etwa 1/3 der Länge des Lagerabschnitts bzw. des Lagerringes betragen. Es hat sich bei Versuchen herausgestellt, daß diese Abmessungsbereiche zum einen zu einem hinreichend großen Tragbereich und zum anderen zu hinreichend großen Freiräumen auf beiden Seiten des Tragbereichs führen. Der Tragbereich selbst kann an seiner Mantelfläche zylindrisch ausgebildet sein.

Am Lagerabschnitt können die äußeren Bereiche durch stufenförmig oder nach außen kontinuierlich verjüngte Längsbereiche des betreffenden Lagerabschnitts gebildet sein. In vergleichbarer Weise können die äußeren Bereiche am Lagerring durch stufenförmig oder zu den Enden des Lagerrings in divergente Erweiterungen gebildet sein.

Die erfindungsgemäßen Ausgestaltungen eignen sich sowohl für ein Gleitlager als auch ein Wälzlager. In beiden Fällen wird die Stützkraft des Lagers über den inneren Lagerring auf den Tragbereich des Lagerabschnitts oder des Lagerringes übertragen, bzw. umgekehrt. Die erfindungsgemäßen Ausgestaltungen eignen sich besonders gut für ein Nadellager, bei dem das radiale Lagerspiel besonders gering ist und deshalb bereits geringe Durchbiegungen der Welle zu den vorbeschriebenen Belastungen des Drehlagers führen. Es ist auch hervorzuheben, daß Wälzlager für radiale Zwängungen und Druckspitzen auf Grund der geringen Laufflächengröße besonders empfindlich sind.

Nachfolgend werden vorteilhafte Ausgestaltungen der Erfindung anhand von bevorzugten Ausführungsbeispielen und Zeichnungen näher erläutert. Es zeigen:
- Fig. 1: eine erfindungsgemäße Axialkolbenmaschine im axialen Schnitt;
- Fig. 2: einen Lagerbereich einer Triebwelle der Axialkolbenmaschine in der Seitenansicht;
- Fig. 3: einen Lagerabschnitt der Triebwelle in der Seitenansicht;
- Fig. 4: den Lagerabschnitt nach Fig. 3 mit einem aufgeschobenen inneren Lagerring und
- Fig. 5: einen Lagerabschnitt mit einem darauf sitzenden inneren Lagerring in abgewandelter Ausgestaltung.

Die beispielhafte und in ihrer Gesamtheit mit 1 bezeichnete Kolbenmaschine weist ein Gehäuse 2 auf, in dessen Innenraum 3 eine Schrägscheibe 4 und eine Zylindertrommel 5 nebeneinander angeordnet sind. In der Zylindertrommel 5 sind auf dem Umfang verteilt Kolbenlöcher 6 angeordnet, die sich beim vorliegenden Ausführungsbeispiel einer Axialkolbenmaschine im wesentlichen parallel zu einer Mittelachse 7 der Zylindertrommel 5 erstrecken und an der der Schrägscheibe 4 zugewandten Stirnseite 5a der Zylindertrommel 5 offen sind. In den Kolbenlöchern 6 sind vorzugsweise zylindrische Kolben 9 im wesentlichen axial verschiebbar gelagert, die mit ihren Kolbenköpfen 9a Arbeitskammern 11 in der Zylindertrommel 5 in Richtung auf die Schrägscheibe 4 begrenzen. Die der Schrägscheibe 4 zugewandten Fußenden 9b der Kolben 9 sind jeweils durch ein Gelenk 12 an der Schrägscheibe 4 abgestützt, wobei Gleitschuhe 13 vorhanden sein können, zwischen denen und den Fußenden 9b die vorzugsweise als Kugelgelenke mit einem Kugelkopf und einer Kugelausnehmung ausgebildeten Gelenke 12 angeordnet sind.

Die Zylindertrommel 5 liegt mit ihrer der Schrägscheibe 4 abgewandten Stirnseite 5b an einer Steuerscheibe 14 an, in der zwei Steueröffnungen 15 in Form von Durchgangslöchern angeordnet sind, die Abschnitte von einer angedeuteten Zuführungsleitung 16 und einer Abführungsleitung 17 bilden, die sich durch eine benachbarte Gehäusewand 18 erstrecken, an der die Steuerscheibe 14 gehalten ist. Die Zylindertrommel 5 ist auf einer Triebwelle 19 gelagert, die drehbar im Gehäuse 2 gelagert ist und deren Drehachse 21 koaxial zur Mittelachse 7 verläuft.

Beim vorliegenden Ausführungsbeispiel ist das Gehäuse 2 aus einem topfförmigen Gehäuseteil 2a mit einem Gehäuseboden 2b und einer Umfangswand 2c sowie einem die Gehäusewand 18 bildenden Deckel 2d gebildet, der am freien Rand der Umfangswand 2c anliegt und damit durch andeutungsweise dargestellte Schrauben 22 verschraubt ist. Zur Verbindung der weiterführenden Zuführungs- und Abführungsleitungen 16, 17 sind am Deckel 2d Leitungsanschlüsse 16a, 17a vorgesehen.

Die Triebwelle 19, die die Zylindertrommel 5 in einer Lagerbohrung 23 durchsetzt, ist in Lagerausnehmungen des Gehäusebodens 2b und des Deckels 2d mittels geeigneten Drehlagern 25, 26, z. B. Gleitlagern oder insbesondere Wälzlagern, drehbar gelagert und abgedichtet, wobei sie den Gehäuseboden 2b axial durchsetzt und mit einem Triebzapfen 19a vom Gehäuseboden 2b absteht.

Beim vorliegenden Ausführungsbeispiel der Kolbenmaschine 1 als Schrägscheibenmaschine ist die Zylindertrommel 5 durch eine Drehmitnahmeverbindung 27, z. B. eine Zahnkupplung, drehfest auf der Triebwelle 19 angeordnet, wobei diese die fest am Gehäuseboden 2 angeordnete oder darin ausgebildete Schrägscheibe 4 in einem Durchgangsloch 4a durchsetzt. Beim vorliegenden Ausführungsbeispiel rotiert im Funktionsbetrieb die Zylindertrommel 5 relativ zur Schrägscheibe 4, wobei die Kolben 9 längs in Richtung auf die Arbeitskammern 11 und zurück verschoben werden.

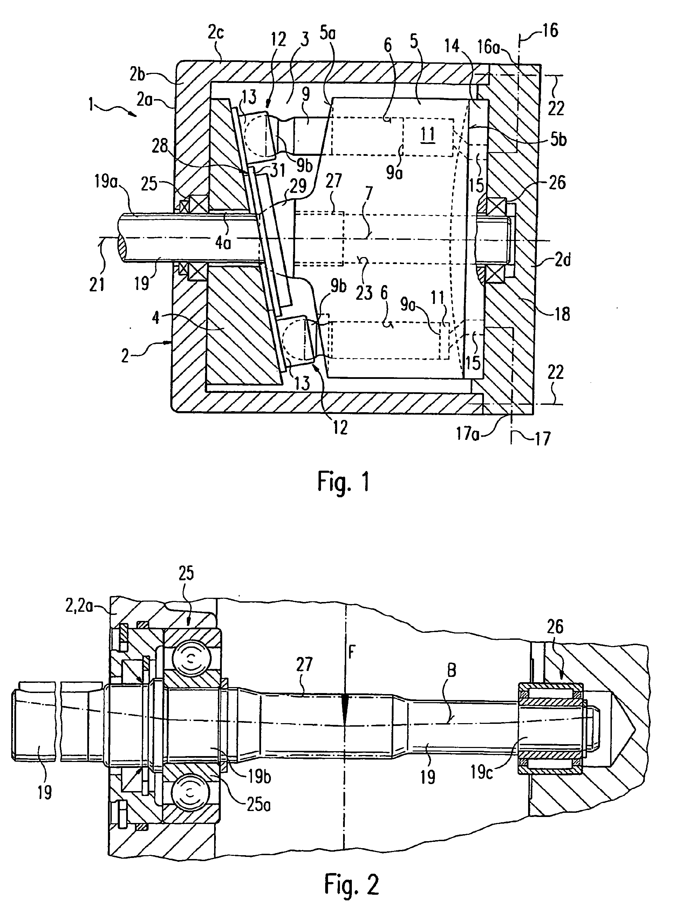

Beim Ausführungsbeispiel nach Fig. 2 ist das Drehlager 25 im Gehäuseboden 2a durch ein Wälzlager, z. B. ein Kugellager, und das Drehlager 26 im Deckel 2d durch ein Wälzlager, insbesondere ein Nadellager, gebildet.

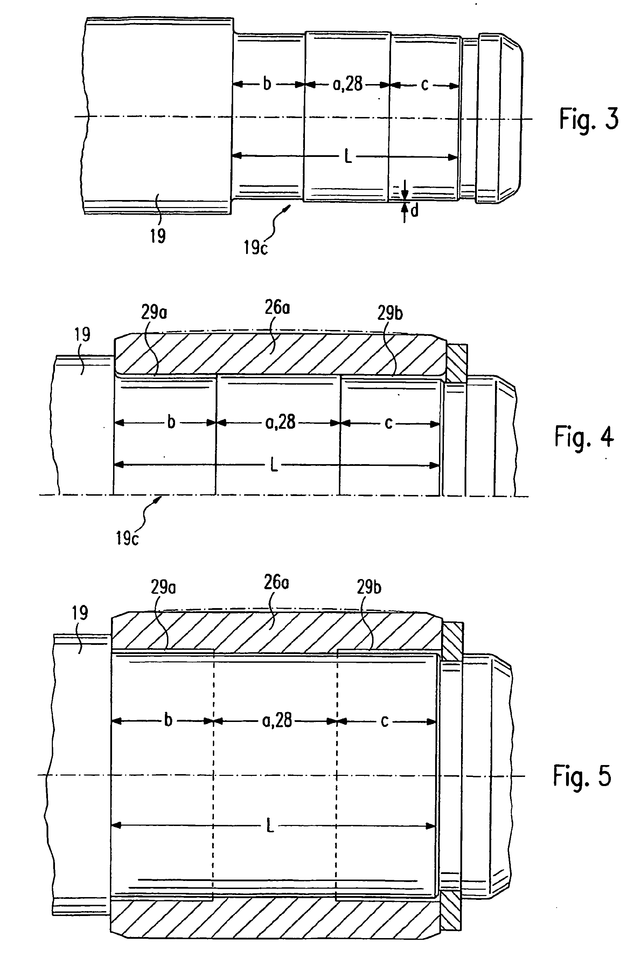

Die die inneren Lagerringe 25a, 26a tragenden Lagerabschnitte der Triebwelle 19 sind mit 19b, 19c bezeichnet. Im Rahmen der Erfindung können eines der beiden Drehlager 25, 26 oder beide Drehlager 25, 26 so ausgebildet sein, wie es im Folgenden beim Drehlager 26 im Deckel 2d anhand Fig. 3 bis 5 beschrieben wird.

Bei der erfindungsgemäßen Ausgestaltung ist der Lagerabschnitt 19c auf beiden Seiten eines mittleren Abschnitts a im Querschnitt verjüngt. Diese sich neben dem mittleren Abschnitt a befindlichen äußeren Bereiche sind mit b und c bezeichnet. Die Verjüngung kann eine stufenförmige oder zum jeweiligen Ende des Lagerabschnitts 19c hin konvergent verlaufende Verjüngung sein. Beim vorliegenden Ausführungsbeispiel sind die äußeren Bereiche b, c stufenförmig verjüngte zylindrische äußere Bereiche b, c. Der mittlere Abschnitt ist vorzugsweise ebenfalls zylindrisch ausgebildet. Er bildet einen Tragbereich 28 für den inneren Lagerring 26a. Der Tragbereich 28 ist im Vergleich mit bekannten Ausgestaltungen axial auf den mittleren Bereich a verkürzt und z. B. zylindrisch ausgebildet. Die axiale Abmessung des Tragbereichs 28 beträgt etwa 1/4 bis 3/4, vorzugsweise 1/3, der Länge L des Lagerabschnitts 19c. Das radiale Verjüngungsmaß d beträgt wenigstens im Endbereich der äußeren Bereiche b, c 0,05 mm.

Der Lagerring 26a sitzt im Tragbereich 28 mit einer für die inneren Lagerringe von Wälzlagern üblichen Passung ohne radialem Spiel auf dem Lagerabschnitt 19c. Zwischen den verjüngten Mantelflächen der äußeren Bereiche b, c und der zylindrischen Innenmantelfläche des Lagerrings 26a sind auf Grund des radialen Bewegungsspiels ringförmige Freiräume 29a, 29b vorhanden. Bei einer in Fig. 2 andeutungsweise dargestellten Biegung B der Triebwelle 19 können die Endbereiche des betreffenden Lagerabschnitts 19c in die Freiräume 29a, 29b eintauchen, ohne Zwängungen und Druckbeanspruchungen auf den Lagerring 27a auszuüben.

Wenn der Tragbereich 28 zylindrisch ausgebildet ist, kann es beim Durchbiegen der Triebwellen 19 im Tragbereich 28 zu geringfügigen Druckbeanspruchungen mit dem Lagerring 26a kommen, wodurch der Lagerring 26a in seinem mittleren Bereich geringfügig nach außen gedehnt werden kann, wie es Fig. 4 andeutungsweise strichpunktiert zeigt.

Das Beispiel nach Fig. 5, bei dem gleiche oder vergleichbare Teile mit gleichen Bezugszeichen versehen sind, unterscheidet sich von dem vorbeschriebenen Ausführungsbeispiel dadurch, daß nicht der Lagerabschnitt 19c sondern der Lagerring 26a in seinem mittleren Bereich a den Tragbereich 28a aufweist, neben dem in den äußeren Bereichen b, c der Lagerring 26a innen entweder stufenförmig oder zu seinen Enden hin divergent erweitert ist. Es ergibt sich hierdurch in den äußeren Bereichen b, c jeweils ein radiales Spiel, bzw. ein ringförmiger Freiraum 29a, 29b zwischen der zylindrischen Mantelfläche des Lagerabschnitts 19c und den äußeren Bereichen b, c. Bei einer Durchbiegung der Triebwelle 19 können die Endbereiche des Lagerabschnitts 19c in diese Freiräume 29a, 29b mit den vorbeschriebenen Vorteilen eintauchen.

## Patentansprüche

1. Kolbenmaschine (1), mit einem Gehäuse (2), in dem eine Welle (19) in zwei Drehlagern (25, 26) drehbar gelagert ist, von denen wenigstens ein Drehlager einen Innenring (26a) aufweist, der ohne radialem Bewegungsspiel auf einem Tragbereich (28) eines Lagerabschnitts (19c) der Welle (19) sitzt,
**dadurch gekennzeichnet,**
**dass** die axiale Länge des Tragbereichs (28) des Lagerabschnitts (19c) der Welle (19) einem mittleren Bereich (a) des Lagerabschnitts (19c) der Welle (19) entspricht und dass der Lagerabschnitt (19c) der Welle (19) im mittleren Bereich (a) einen größeren Durchmesser aufweist als in seinen äußeren Bereichen (b,c), so dass an beiden äußeren Bereichen (b, c) des Lagerabschnitts (19c) der Welle (19) ein radiales Bewegungsspiel zwischen den äußeren Bereichen (b, c) des Lagerabschnitts (19c) der Welle (19) und dem Innenring (26a) vorhanden ist.

2. Kolbenmaschine nach Anspruch 1,
**dadurch gekennzeichnet,**
**dass** es sich bei der Kolbenmaschine um eine Axialkolbenmaschine oder Radialkolbenmaschine handelt.

3. Kolbenmaschine nach Anspruch 1,
**dadurch gekennzeichnet,**
**dass** der Innenring (26a) in seinem mittleren Bereich einen kleineren Durchmesser aufweist als in seinen äußeren Bereichen.

4. Kolbenmaschine nach einem der vorherigen Ansprüche,
**dadurch gekennzeichnet,**
**dass** der mittlere Bereich (a) etwa 1/2 bis insbesondere etwa 1/3, der Länge (L) des Lagerabschitts der Welle (19c) beträgt.

5. Kolbenmaschine nach einem der vorherigen Ansprüche,
**dadurch gekennzeichnet,**
**dass** der mittlere Bereich (a) zylindrisch ausgebildet ist.

6. Kolbenmaschine nach einem der vorherigen Ansprüche,
**dadurch gekennzeichnet,**
**dass** die äußeren Bereiche zu ihren den mittleren Bereichen abgewandten Rändern hin konvergent geformt sind, insbesondere stufenförmig verjüngt sind.

7. Kolbenmaschine nach Anspruch 6,
**dadurch gekennzeichnet,**
**dass** die äußeren Bereiche zylindrisch verjüngt sind.

8. Kolbenmaschine nach einem der vorherigen Ansprüche,
**dadurch gekennzeichnet,**
**dass** das Gehäuse (2) einen topfförmigen Gehäuseteil und einen Deckel (2d) aufweist, wobei das Drehlager (26) im Deckel (2d) angeordnet ist.

9. Kolbenmaschine nach Anspruch 8,
**dadurch gekennzeichnet,**
**dass** das Drehlager (26) ein Gleitlager oder ein Wälzlager, insbesondere ein Nadellager, ist.

## Claims

1. Piston engine (1) with a housing (2) in which a shaft (19) is rotatably mounted in two pivot bearings (25, 26), of which at least one pivot bearing has an inner ring (26a) which is seated, without radial clearance of motion, on a supporting region (28) of a bearing section (19c) of said shaft (19),
**characterised in that**
the axial length of the supporting region (28) of the bearing section (19c) of the shaft (19) corresponds to a central region (a) of said bearing section (19c) of said shaft (19) and that the bearing section (19c) of the shaft (19) has a greater diameter in the central region (a) than in its outer regions (b, c) so that, at the two outer regions (b, c) of the bearing section (19c) of the shaft (19), there is a radial clearance of motion between said outer regions (b, c) of said bearing section (19c) of said shaft (19) and the inner ring (26a).

2. Piston engine according to claim 1,
**characterised in that**
the piston engine in question is an axial piston engine or a radial piston engine.

3. Piston engine according to claim 1,
**characterised in that**
the inner ring (26a) has a smaller diameter in its central region than in its outer regions.

4. Piston engine according to one of the preceding claims,
**characterised in that**
the central region (a) amounts to about 1/2 to 1/4, and in particular to about 1/3, of the length (L) of the bearing section of the shaft (19c).

5. Piston engine according to one of the preceding claims,
**characterised in that**
the central region (a) is of cylindrical construction.

6. Piston engine according to one of the preceding claims,
**characterised in that**
the outer regions are shaped in a manner converging towards their edges that face away from the central regions and, in particular, are narrowed in a step-shaped manner.

7. Piston engine according to claim 6,
**characterised in that**
the outer regions are narrowed in a cylindrical manner.

8. Piston engine according to one of the preceding claims,
**characterised in that**
the housing (2) has a pot-shaped housing part and a cover (2d), the pivot bearing (26) being disposed in said cover (2d).

9. Piston engine according to claim 8,
**characterised in that**
the pivot bearing (26) is a plain bearing or a rolling bearing, in particular a needle bearing.

## Revendications

1. Machine à pistons (1) comprenant un carter (2) dans lequel un arbre (19) est monté rotatif dans deux paliers de rotation (25, 26), dont un palier de rotation au moins présente une bague intérieure (26a), qui s'appuie, sans jeu radial de mouvement, sur une zone de portée (28) d'un tronçon de montage de palier (19c) de l'arbre (19),
**caractérisée**
**en ce que** la longueur axiale de la zone de portée (28) du tronçon de montage de palier (19c) de l'arbre (19) correspond à une zone centrale (a) du tronçon de montage de palier (19c) de l'arbre (19), et en ce que le tronçon de montage de palier (19c) de l'arbre (19) présente dans sa zone centrale (a), un diamètre plus grand que dans ses zones extérieures (b, c), de sorte qu'il existe, dans les deux zones extérieures (b, c) du tronçon de montage de palier (19c) de l'arbre (19), un jeu radial de mouvement entre les zones extérieures (b, c) du tronçon de montage de palier (19c) de l'arbre (19) et la bague intérieure (26a).

2. Machine à pistons selon la revendication 1,
**caractérisée**
**en ce que** concernant la machine à pistons, il s'agit d'une machine à pistons axiaux ou d'une machine à pistons radiaux.

3. Machine à pistons selon la revendication 1,
**caractérisée**
**en ce que** la bague intérieure (26a) présente, dans sa zone centrale, un diamètre plus faible que dans ses zones extérieures.

4. Machine à pistons selon l'une des revendications précédentes,
**caractérisée**
**en ce que** la zone centrale (a) représente environ 1/2 à 1/4, notamment environ 1/3 de la longueur (L) du tronçon de montage de palier (19c) de l'arbre.

5. Machine à pistons selon l'une des revendications précédentes,
**caractérisée**
**en ce que** la zone centrale (a) est de configuration cylindrique.

6. Machine à pistons selon l'une des revendications précédentes,
**caractérisée**
**en ce que** les zones extérieures sont réalisées selon une forme convergente en direction de leurs bords opposés à ceux adjacents de la zone centrale, notamment rétrécis de manière étagée en gradin.

7. Machine à pistons selon la revendication 6,
**caractérisée**
**en ce que** les zones extérieures sont rétrécies selon une forme cylindrique.

8. Machine à pistons selon l'une des revendications précédentes,
**caractérisée**
**en ce que** le carter (2) comprend une partie en forme de cloche et un couvercle (2d), le palier de rotation (26) étant agencé dans le couvercle (2d).

9. Machine à pistons selon la revendication 8,
**caractérisée**
**en ce que** le palier de rotation (26) est un palier lisse ou un palier à roulement, notamment un palier à roulement à aiguilles.
